# EUROPÄISCHE PATENTSCHRIFT

(11) **EP 2 435 810 B1**
(45) Veröffentlichungstag und Bekanntmachung des Hinweises auf die Patenterteilung: **22.01.2014**
(21) Anmeldenummer: 10717630.7
(22) Anmeldetag: 29.04.2010
(51) Int. Cl.: G01L 9/00, G01L 19/06, G01L 19/14

(54) **STEUERGERÄT MIT DRUCKSENSOR**
CONTROL DEVICE HAVING A PRESSURE SENSOR
ORGANE DE COMMANDE À CAPTEUR DE PRESSION

(30) Priorität: 25.05.2009 DE 102009026444
(43) Veröffentlichungstag der Anmeldung: 04.04.2012
(73) Patentinhaber: Robert Bosch GmbH, 70442 Stuttgart (DE)
(72) Erfinder: HENNEL, Udo, 74343 Sachsenheim (DE)
(86) Internationale Anmeldenummer: PCT/EP2010/055770
(87) Internationale Veröffentlichungsnummer: WO 2010/136292

(56) Entgegenhaltungen:
- EP-A2- 1 152 231
- WO-A1-00/45143
- DE-A1- 4 334 123
- DE-A1- 19 626 084

## Beschreibung

Die Erfindung betrifft ein Steuergerät, insbesondere für ein Kraftfahrzeug, mit einem mehrteiligen Gehäuse, in dem zumindest eine Leiterplatte angeordnet ist, wobei zumindest ein Gehäuseteil des Gehäuses einen Luftkanal aufweist, der von einer Öffnung im Gehäuse zu einem in dem Gehäuse angeordneten, den Umgebungsdruck ermittelnden Drucksensor führt und gegen die Leiterplatte abgedichtet ist.

### Stand der Technik

Derartige Steuergeräte sind aus dem Stand der Technik bekannt. Das Vorsehen von Drucksensoren in Steuergeräten führt dazu, dass Steuer- und/oder Messwerte mit höchster Genauigkeit zur Verfügung stehen, wobei der Umgebungsdruck zur Auswertung und/oder Bestimmung entsprechender Signale berücksichtigt werden kann.

Die Offenlegungsschrift DE 100 22 124 A1 offenbart ein entsprechendes Steuergerät mit einem Gehäuse, in welchem ein einen Luftkanal bildender Schnorchel angeordnet ist, welcher von dem Drucksensor aus dem Gehäuse herausführt, sodass der Drucksensor mit dem Umgebungsdruck beaufschlagt ist. Damit der Umgebungsdruck das Steuergerät nicht beeinflusst und damit durch den Luftkanal keine Verunreinigungen oder Feuchtigkeit in das Steuergerät eindringen können, ist der zu dem Drucksensor führende Luftkanal gegen die Leiterplatte abgedichtet, sodass zwar der Drucksensor mit der Umgebungsluft beaufschlagt, die übrigen Komponenten des Steuergeräts jedoch davon isoliert sind.

Nachteilig hierbei ist jedoch, dass der Drucksensor selbst der Umgebungsluft und somit äußeren Einflüssen ausgesetzt ist. Insbesondere können Flüssigkeiten zu dem Drucksensor vordringen und diesen, sei es durch Korrosion oder durch Verfälschen des Messergebnisses, schädigen.

Andere Dokumente der Stand der Technik sind die DE 19626084, EP 1152231, WO 00/45143 und DE 4334123.

### Offenbarung der Erfindung

Das erfindungsgemäße Steuergerät zeichnet sich dadurch aus, dass die Öffnung mittels einer flüssigkeitsundurchlässigen Druckausgleichs-Membran verschlossen ist. Der Luftkanal ist somit an seinem einen Ende gegen die Leiterplatte abgedichtet und an seinem anderen Ende mittels der flüssigkeitsundurchlässigen Druckausgleichs-Membran verschlossen. Der Luftkanal weist dazu vorteilhafterweise im Bereich der Öffnung Mittel zum Halten der Druckausgleichs-Membran auf. So ist die Druckausgleichs-Membran bevorzugt im Bereich der Öffnung formschlüssig und/oder kraftschlüssig gehalten. Hierzu können entsprechende Membran-Aufnahmen in die Gehäusewand beziehungsweise in dem Luftkanal ausgebildet sein, in welche die Druckausgleichs-Membran einbringbar ist. Alternativ oder zusätzlich kann die Membran durch Verkleben gehalten sein. Aufgrund der flüssigkeitsundurchlässigen Ausbildung verhindert die Druckausgleichs-Membran wirksam das Eindringen beziehungsweise Vordringen von Schmutz und insbesondere Flüssigkeiten zu dem Drucksensor, sodass dieser effektiv geschützt ist und gleichzeitig seine Aufgabe erfüllen kann. Dabei ist vorteilhafterweise vorgesehen, dass die Druckausgleichs-Membran innerhalb des Luftkanals die Öffnung verschließend angeordnet ist. Dadurch befindet sich die Druckausgleichs-Membran in einem im Wesentlichen vor äußeren Einwirkungen geschützten Bereich, sodass sie nicht ohne Weiteres beschädigt werden kann. Zweckmäßigerweise weist die Öffnung einen Querschnitt auf, der kleiner als der Querschnitt des Luftkanals ausgebildet ist. Dadurch wird insbesondere der Schutz der Membran weiter erhöht, wobei gleichzeitig dennoch ein vollständiger Druckausgleich mittels der Druckausgleichs-Membran ermöglicht ist.

Nach einer Weiterbildung der Erfindung ist der Luftkanal von dem Gehäuseteil und/oder von einem separaten in das Gehäuse eingebrachten Kanal ausgebildet. Es ist also vorgesehen, dass entweder das Gehäuse selbst derart ausgebildet ist, dass der Luftkanal in das Gehäuseteil integriert vorliegt, oder dass der Luftkanal als separater Kanal in dem Gehäuseteil an der genannten Öffnung zunächst montiert wird. Letzteres ist kostengünstiger und einfacher herzustellen, jedoch in der Montage aufwendiger. Der von dem Gehäuse integrierte beziehungsweise selbst ausgebildete Luftkanal, kann beispielsweise als ein nach innen (in das Gehäuse) ragender Stutzen des Gehäuseteils ausgebildet sein. Durch die mehrteilige Ausbildung des Gehäuses kann die Montage der Leiterplatte sowie des Drucksensors auf einfache Art und Weise erfolgen. Zweckmäßigerweise sind dabei die einzelnen Gehäuseteile an ihren Stoßbereichen mit Dichtungen versehen, sodass das Gehäuse insgesamt geschlossen beziehungsweise dicht ausgebildet ist.

Ferner ist vorgesehen, dass der Luftkanal den Drucksensor umgebend, unter Zwischenschaltung einer Dichtung an der Leiterplatte anliegt. Der Drucksensor liegt somit vollständig innerhalb des Luftkanals. Bevorzugt liegt die Dichtung zumindest seitlich auch an dem Drucksensor an, sodass der Luftkanal vollständig gegen die Leiterplatte abgedichtet ist.

Nach einer Weiterbildung der Erfindung ist vorgesehen, dass die Dichtung als Nassdichtung und/oder als feste Dichtung ausgebildet ist.

Ferner ist vorgesehen, dass die Leiterplatte zumindest im Bereich des Drucksensors eine Vergelung und/oder Lackierung aufweist. Diese dient dem zusätzlichen Schutz der Leiterplatte. Durch die Vergelung und/oder Lackierung wird diese im Bereich des Drucksensors versiegelt.

In einer vorteilhaften Weiterbildung der Erfindung ist das Gehäuseteil als Messerleiste ausgebildet, in welcher der Drucksensor und damit natürlich auch der Luftkanal angeordnet sind. Besonders bevorzugt bildet die Messerleiste den Luftkanal integriert beziehungsweise einstückig.

Zweckmäßigerweise ist der Drucksensor mit Anschlussdrähten versehen ausgebildet.

Vorteilhafterweise ist der mit Anschlussdrähten versehene Drucksensor in einer Gehäuseaussparung oder Luftkanalaussparung angeordnet. Wobei die entsprechende Aussparung derart gestaltet ist, dass der Drucksensor in ihr form- und/oder kraftschlüssig gehalten ist. Wobei die Anordnung stets derart gestaltet ist, dass der Drucksensor sich im Wesentlichen in dem Luftkanal zur Erfassung des Umgebungsdrucks befindet.

Die Dichtung ist von einer den mit Anschlussdrähten versehenen Drucksensor in der Aussparung haltenden Vergussmasse gebildet. Die Vergussmasse erfüllt hierbei zwei Funktionen gleichzeitig, zum Einen dichtet sie den Drucksensor und somit den Luftkanal gegen die Leiterplatte ab, und zum Anderen wirkt sie als Haltemittel für den Drucksensor. Die Anschlussdrähte sind zweckmäßigerweise derart lang ausgebildet, dass sie durch Vergussmasse hindurchragen und somit auf einfache Art und Weise an der Leiterplatte kontaktierbar sind. Im einfachsten Fall werden die Anschlussdrähte dabei in entsprechende Durchbrüche beziehungsweise Durchkontaktierungen der Leiterplatte eingebracht.

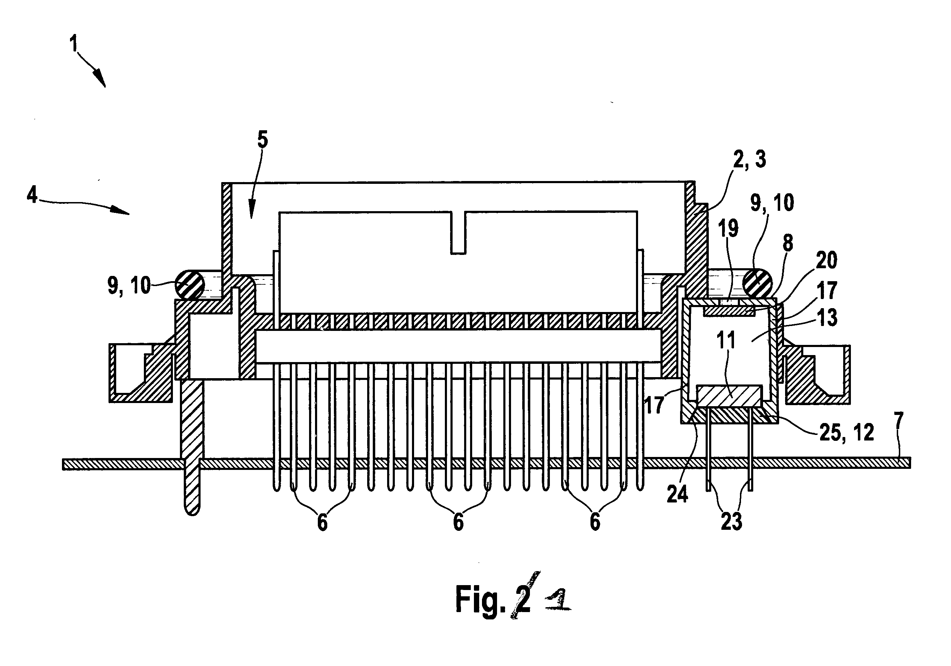

Im Folgenden soll die Erfindung anhand mehrerer Ausführungsbeispiele näher erläutert werden. Dazu zeigt
Figur 1 ein Ausführungsbeispiel in einer schematischen Schnittdarstellung.

Figur 1 zeigt in einer Schnittdarstellung schematisch von einem Steuergerät 1 eines Kraftfahrzeugs einen Gehäuseteil 2, also einen Teil des Gehäuses 3 des Steuergeräts 1. Der dargestellte Teil des Steuergeräts 1 ist als Messerleiste 4 ausgebildet.

Die Messerleiste 4 weist eine durch das Gehäuseteil 2 gebildete Anschlusssteckeraufnahme 5 auf, in welche elektrisch leitfähige Anschlusspins 6 zum Kontaktieren des Steuergeräts 1 ragen. An ihrem anderen Ende sind die Anschlusspins 6 mit einer in dem Gehäuse 2 angeordneten Leiterplatte 7 elektrisch verbunden, wobei hierzu die Anschlusspins 6 in entsprechende Durchkontaktierungen der Leiterplatte 7 einliegen. Aus Übersichtlichkeitsgründen sind hier nur einige der Anschlusspins 6 mit Bezugszeichen versehen. Im montierten Zustand des Steuergeräts 1 ragt die Stecker-Aufnahme 5 aus dem Gehäuse 3 des Steuergeräts 1 heraus. Um eine Dichtheit des Steuergeräts 1 zu gewährleisten, weist das Gehäuseteil 2 einen die Stecker-Aufnahme 5 umgebenden Gehäuseanschlag 8 auf, der bei der Montage von innen gegen das die Messerleiste 4 aufnehmende Gehäuseteil gedrückt wird. Vorteilhafterweise ist dabei zwischen der Messerleiste 4 beziehungsweise dem Gehäuseanschlag 8 und dem anderen Gehäuseteil eine Dichtung 9, beispielsweise in Form eines O-Rings 10, angeordnet.

Das Gehäuse 3 beziehungsweise das Gehäuseteil 2 weist einen integrierten, also durch das Gehäuse 3 beziehungsweise Gehäuseteil 2 selbst/einstückig gebildeten Luftkanal 13 auf. Der Luftkanal 13 ist derart ausgebildet, dass er an seinem einen Ende den Drucksensor 11 umgibt.

An dem dem Drucksensor 11 gegenüberliegenden Ende des Luftkanals 13 weist das Gehäuse 3 beziehungsweise Gehäuseteil 2 stirnseitig, beabstandet zu dem Gehäuseanschlag 8, eine Öffnung 19 auf. Der Querschnitt der Öffnung 19 ist dabei kleiner ausgebildet als der des Luftkanals 13. Innerhalb des Luftkanals 13 ist eine Druckausgleichs-Membran 20 derart angeordnet, dass sie die Öffnung 19 (von innen) verschließt.

Vorteilhafterweise ist die Druckausgleichs-Membran 20 an dem Gehäuseteil 2 beziehungsweise Gehäuse 3 mittels Klebemittel gehalten. Alternativ ist es auch denkbar, entsprechende Aufnahmen in dem Gehäuse 3 beziehungsweise Gehäuseteil 2 vorzusehen, in die die Druckausgleichs-Membran 20 einbringbar ist, sodass sie zusätzlich oder alternativ formschlüssig gehalten ist.

Die Druckausgleichs-Membran 20 ist zweckmäßigerweise flüssigkeitsundurchlässig ausgebildet und verschließt die Öffnung 19, sodass zwar ein Druckausgleich zwischen dem Luftkanal 13 und der Umgebungsluft erfolgen kann, jedoch keine Flüssigkeit in dem Luftkanal 13 eindringen kann. Dadurch wird gewährleistet, dass nicht nur das Steuergerät 1 sondern insbesondere auch der Drucksensor 11 gegen Flüssigkeit geschützt ist, die den Drucksensor 11 durch Korrosion oder durch Beeinflussen der Messergebnisse schädigen könnte.

Auf der einen Seite ist somit der Luftkanal 13 durch die Druckausgleichs-Membran 20 gegen Flüssigkeit abgedichtet und auf der anderen Seite gasdicht zum Inneren des Steuergeräts durch die Dichtung 12 zwischen dem Luftkanal 13 und der Leiterplatte 7. Somit kann der Drucksensor 11, vorteilhafterweise als Atmosphärendruck-Fühler'ausgebildet, den Umgebungsdruck messen, obwohl das Steuergerät 1 vollständig abgedichtet ausgebildet ist.

Die Figur 1 zeigt dass der Drucksensor 11 mit Anschlussdrähten 23 versehen ist, mit welchen der Drucksensor 11 elektrisch an der Leiterplatte 7 kontaktierbar ist. Wie die Anschlusspins 6 liegen vorteilhafterweise auch die Anschlussdrähte 23 in entsprechenden Durchkontaktierungen der Leiterplatte 7 ein.

Das Gehäuseteil 2 weist an dem dem Drucksensor 11 zugeordneten Ende des Luftkanals 13 eine stirnseitige Aussparung 24 auf in der der Drucksensor 11 derart gehalten ist, dass er sich im Wesentlichen in dem Luftkanal 13 befindet. Die die Anschlussdrähte 23 aufweisende Unterseite des Drucksensors 11 ist mittels einer geeigneten Vergussmasse 25 in der Aussparung 24 gehalten. die Vergussmasse 25 bildet dabei gleichzeitig die Dichtung 12, zum Abdichten des Luftkanals 13 gegenüber der Leiterplatte 7.

Alternativ zu den oben beschriebenen Ausführungsbeispiel des Steuergeräts 1 ist es ebenso denkbar, den Luftkanal 13 als separaten Kanal in das Gehäuse 3 beziehungsweise in das Gehäuseteil 2 einzubringen. Die oben beschriebene einstückige Ausbildung gewährleistet jedoch eine höhere Dichtheit sowie eine einfache Montage. Natürlich muss das Gehäuseteil 2 nicht als Messerleiste 4 ausgebildet sein, vielmehr kann das Gehäuseteil 2 jedes beliebige Gehäuseteil des Gehäuses 3 des Steuergeräts 1 darstellen beziehungsweise bilden. Zweckmäßigerweise weist die Leiterplatte im Bereich beziehungsweise in der näheren Umgebung des Drucksensors 11 keine weiteren Elemente auf, die zu einem Konflikt mit dem Luftkanal 13 und/oder der Dichtung 12 führen könnten. Ansonsten kann auf der Leiterplatte 7 natürlich mindestens eine elektrische/elektronische Baugruppe des Steuergeräts 1 angeordnet sein.

## Patentansprüche

1. Steuergerät, insbesondere für ein Kraftfahrzeug, mit einem mehrteiligen Gehäuse, in dem zumindest eine Leiterplatte angeordnet ist, wobei zumindest ein Gehäuseteil des Gehäuses einen Luftkanal aufweist, der von einer Öffnung in dem Gehäuseteil zu einem auf der Leiterplatte angeordneten, den Umgebungsdruck ermittelnden Drucksensor führt und gegen die Leiterplatte abgedichtet ist, wobei die Öffnung (19) mittels einer flüssigkeitsundurchlässigen Druckausgleichs-Membran (20) verschlossen ist, **dadurch gekennzeichnet, dass** der Drucksensor (11) mit Anschlussdrähten (23) versehen ausgebildet und in einer Luftkanalaussparung (24) gehalten ist, wobei eine Dichtung (12) zum Abdichten des Luftkanals (13) gegenüber der Leiterplatte (7) von einer den mit den Anschlussdrähten (23) versehenen Drucksensor (11) in der Luftkanalaussparung (24) haltenden Vergussmasse (25) gebildet ist.

2. Steuergerät nach Anspruch 1, **dadurch gekennzeichnet, dass** die Druckausgleichs-Membran (20) innerhalb des Luftkanals (13) angeordnet ist.

3. Steuergerät nach einem der vorhergehenden Ansprüche, **dadurch gekennzeichnet, dass** der Luftkanal (13) von dem Gehäuseteil (2) und/oder von einem separaten, in das Gehäuseteil (2) eingebrachten Kanal gebildet wird.

4. Steuergerät nach einem der vorhergehenden Ansprüche, **dadurch gekennzeichnet, dass** der Luftkanal (13) den Drucksensor (11) umgebend, unter Zwischenschaltung einer Dichtung (12) an der Leiterplatte (7) anliegt.

5. Steuergerät nach einem der vorhergehenden Ansprüche, **dadurch gekennzeichnet, dass** die Dichtung (12) als Nassdichtung und/oder als feste Dichtung, insbesondere als Labyrinthdichtung (18) ausgebildet ist.

6. Steuergerät nach einem der vorhergehenden Ansprüche, **dadurch gekennzeichnet, dass** die Leiterplatte (7) zumindest im Bereich des Drucksensors (11) eine Vergelung und/oder Lackierung aufweist.

7. Steuergerät nach einem der vorhergehenden Ansprüche, **dadurch gekennzeichnet, dass** das Gehäuseteil (2) als Messerleiste (4) ausgebildet ist.

8. Steuergerät nach einem der vorhergehenden Ansprüche, **dadurch gekennzeichnet, dass** der Drucksensor (11) als SMD-Bauelement (21) oder mit Anschlussdrähten (23) versehen ausgebildet ist.

9. Steuergerät nach einem der vorhergehenden Ansprüche, **dadurch gekennzeichnet, dass** der mit den Anschlussdrähten (23) versehene Drucksensor (11) in einer Luftkanalaussparung (24) gehalten ist.

10. Steuergerät nach einem der vorhergehenden Ansprüche, **dadurch gekennzeichnet, dass** die Dichtung (12) von einer den mit den Anschlussdrähten (23) versehenen Drucksensor (11) in der Luftkanalaussparung (24) haltenden Vergussmasse (25) gebildet ist.

## Claims

1. Control device, in particular for a motor vehicle, having a multipartite housing in which at least one printed circuit board is arranged, with at least one housing part of the housing having an air duct which leads from an opening in the housing part to a pressure sensor, which is arranged on the printed circuit board and determines the ambient pressure, and is sealed off from the printed circuit board, with the opening (19) being closed by means of a liquid-impermeable pressure-compensation diaphragm (20), **characterized in that** the pressure sensor (11) is designed so as to be provided with connection wires (23) and is held in an air-duct cutout (24), with a seal (12) for sealing off the air duct (13) from the printed circuit board (7) being formed by an encapsulation compound (25) which holds the pressure sensor (11), which is provided with the connection wires (23), in the air-duct cutout (24).

2. Control device according to Claim 1, **characterized in that** the pressure-compensation diaphragm (20) is arranged within the air duct (13).

3. Control device according to either of the preceding claims, **characterized in that** the air duct (13) is formed by the housing part (2) and/or by a separate duct which is made in the housing part (2).

4. Control device according to one of the preceding claims, **characterized in that** the air duct (13) bears against the printed circuit board (7) so as to surround the pressure sensor (11) and with the interposition of a seal (12).

5. Control device according to one of the preceding claims, **characterized in that** the seal (12) is designed as a wet seal and/or as a fixed seal, in particular as a labyrinth seal (18).

6. Control device according to one of the preceding claims, **characterized in that** the printed circuit board (7) is gelled and/or coated at least in the region of the pressure sensor (11).

7. Control device according to one of the preceding claims, **characterized in that** the housing part (2) is designed as a male multipoint connector (4).

8. Control device according to one of the preceding claims, **characterized in that** the pressure sensor (11) is designed as an SMD component (21) or so as to be provided with connection wires (23).

9. Control device according to one of the preceding claims, **characterized in that** the pressure sensor (11), which is provided with the connection wires (23), is held in an air-duct cutout (24).

10. Control device according to one of the preceding claims, **characterized in that** the seal (12) is formed by an encapsulation compound (25) which holds the pressure sensor (11), which is provided with the connection wires (23), in the air-duct cutout (24).

## Revendications

1. Appareil de commande, en particulier pour un véhicule automobile, comprenant un boîtier en plusieurs parties dans lequel est disposée au moins une carte à circuits intégrés, au moins une partie de boîtier du boîtier présentant un conduit d'air, qui conduit depuis une ouverture dans la partie de boîtier jusqu'à un capteur de pression disposé sur la carte à circuits intégrés, déterminant la pression de l'environnement et qui est étanchéifié vis-à-vis de la carte à circuits intégrés, l'ouverture (19) étant fermée au moyen d'une membrane d'équilibrage de la pression imperméable aux liquides (20), **caractérisé en ce que** le capteur de pression (11) est réalisé avec des fils de connexion (23) et est maintenu dans un évidement du conduit d'air (24), un joint d'étanchéité (12) pour étanchéifier le conduit d'air (13) vis-à-vis de la carte à circuits intégrés (7) étant formé par une masse de scellage (25) retenant le capteur de pression (11) pourvu des fils de connexion (23) dans l'évidement du conduit d'air (24).

2. Appareil de commande selon la revendication 1, **caractérisé en ce que** la membrane d'équilibrage de la pression (20) est disposée à l'intérieur du conduit d'air (13).

3. Appareil de commande selon l'une quelconque des revendications précédentes, **caractérisé en ce que** le conduit d'air (13) est formé par la partie de boîtier (2) et/ou par un conduit séparé, réalisé dans la partie de boîtier (2).

4. Appareil de commande selon l'une quelconque des revendications précédentes, **caractérisé en ce que** le conduit d'air (13) s'applique contre la carte à circuits intégrés (7) en entourant le capteur de pression (11), avec interposition d'un joint d'étanchéité (12).

5. Appareil de commande selon l'une quelconque des revendications précédentes, **caractérisé en ce que** le joint d'étanchéité (12) est réalisé sous forme de joint humide et/ou sous forme de joint solide, en particulier sous forme de joint à labyrinthe (18).

6. Appareil de commande selon l'une quelconque des revendications précédentes, **caractérisé en ce que** la carte à circuits intégrés (7) présente, au moins dans la région du capteur de pression (11), une injection de gel et/ou un vernissage.

7. Appareil de commande selon l'une quelconque des revendications précédentes, **caractérisé en ce que** la partie de boîtier (2) est réalisée sous forme de barre à couteau (4).

8. Appareil de commande selon l'une quelconque des revendications précédentes, **caractérisé en ce que** le capteur de pression (11) est réalisé sous forme de composant monté en surface (SMD) (21) ou est pourvu de fils de connexion (23).

9. Appareil de commande selon l'une quelconque des revendications précédentes, **caractérisé en ce que** le capteur de pression (11) pourvu des fils de connexion (23) est maintenu dans un évidement du conduit d'air (24).

10. Appareil de commande selon l'une quelconque des revendications précédentes, **caractérisé en ce que** le joint d'étanchéité (12) est formé par une masse de scellage (25) retenant le capteur de pression (11) pourvu des fils de connexion (23) dans l'évidement du conduit d'air (24).
